(19) Europäisches Patentamt
European Patent Office
Office européen des brevets

(11) EP 3 545 343 B1

(12) **EUROPEAN PATENT SPECIFICATION**

(45) Date of publication and mention of the grant of the patent:
**30.03.2022 Bulletin 2022/13**

(21) Application number: **16922349.2**

(22) Date of filing: **23.11.2016**

(51) International Patent Classification (IPC):
***G02B 1/11*** *(2015.01)* ***G02B 1/10*** *(2015.01)*
***C09D 175/14*** *(2006.01)* ***C09D 133/04*** *(2006.01)*

(52) Cooperative Patent Classification (CPC):
(C-Sets available)
**C09D 4/00; C09D 133/04; C09D 175/14;**
**G02B 5/0221; G02B 5/0268** (Cont.)

(86) International application number:
**PCT/CN2016/106902**

(87) International publication number:
**WO 2018/094601 (31.05.2018 Gazette 2018/22)**

(54) **FORMABLE ANTI-GLARE POLYMER FILMS**

FORMBARE BLENDSCHUTZPOLYMERFOLIEN

FILMS POLYMÈRES ANTI-ÉBLOUISSEMENT FORMABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(73) Proprietor: **Covestro Intellectual Property GmbH & Co. KG**
**51373 Leverkusen (DE)**

(72) Inventors:
- **DEIVARAJ, Theivanayagam Chairman**
  **40489 Düsseldorf (DE)**
- **KOSTROMINE, Serguei**
  **53913 Swisttal (DE)**
- **PETZOLDT, Joachim**
  **40789 Monheim am Rhein (DE)**
- **BAYRAM, Nutkiye**
  **51371 Leverkusen (DE)**
- **SCHEIBNER, Daniel**
  **50226 Frechen (DE)**
- **WONG, Chung Leung**
  **Hong Kong (CN)**
- **FENG, Meng**
  **Shanghai (CN)**

(74) Representative: **Levpat**
**c/o Covestro AG**
**Gebäude 4825**
**51365 Leverkusen (DE)**

(56) References cited:
**WO-A1-2004/044649**
**CN-A- 105 505 199**
**KR-A- 20110 096 475**
**US-A1- 2011 080 645**
**US-A1- 2012 141 814**
**US-A1- 2014 133 033**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 4/00, C08F 222/102**

## Description

The present invention according to the appended claims relates to a formable anti-glare polymer film and a process for producing such film. Furthermore the invention relates to molded articles, particularly molded articles obtainable by in-mold decoration (IMD) processes, and the use of the formable anti-glare films for the manufacture of molded articles.

An anti-glare surface is understood to mean an optical surface where specular reflection is reduced (Becker, M.E. and Neumeier, J., 70.4: Optical Characterization of Scattering Anti-Glare Layers, SID Symposium Digest of Technical Papers, SID, 2011, 42, 1038-1041). Typical applications of such surfaces are found in display technology, but also in the fields of architecture, furniture, etc. In this context, the anti-glare configuration of films is the subject of particular attention because of its wide range of use.

There exist various methods in the art for imparting anti-glare properties to the surface of a film, for example by means of roughened surfaces (Huckaby, D.K.P. & Caims, D.R., 36.2, Quantifying "Sparkle" of Anti-Glare Surfaces, SID Symposium Digest of Technical Papers, 2009, 40, 511-513), by means of micro- or nanoparticles embedded into the surface layer (Liu, B.T., Teng, Y.T., A novel method to control inner and outer haze of an anti-glare film by surface modification of light-scattering particles, Journal of Colloid and Interface Science, 2010, 350, 421-426) or by means of micro- or nanostructures embossed into the surface (Boerner, V., Abbott, S. Bläsi, B., Gombert, A., Hoßfeld, W., 7.3, Blackwell Publishing Ltd., 2003, 34, 68-71). A further method involves establishing the scattering function through a phase separation in the surface layer (Stefan Walheim, Erik Schaffer, Jürgen Mlynek, Ullrich Steiner, Nanophase-Separated Polymer Films as High-Performance Antireflection Coatings, Science, 1999, 283, 520-522).

A process widespread in the prior art for imparting anti-glare properties to a film surface involves embossing a microstructure into the film surface. Transparent films, which are particularly used for this purpose, consist, for example, of polycarbonate, as obtainable, inter alia, under the trade name Makrofol™ from the manufacturer Covestro Deutschland AG. Films of this kind are produced, for example, by extrusion, in which case the surface texturing of the film is created by embossing with specific rolls into the as yet incompletely cooled polycarbonate. Films of this kind are commercially available, for example, under the trade mark Makrofol™ 1-M and 1-4, SR 908 from the manufacturer Covestro Deutschland AG. The surface obtained in this way is thus anti-glare, but is sensitive to many solvents and is additionally soft and prone to scratching.

In-mold decoration (IMD) involves inserting decorative coated/non-coated films into a molding tool followed by injection molding process. The decorative films are covered on the surface of injection parts, resulting in decorative effects. The pattern image on the back or decorative films is sandwiched between the decorative films and injection parts. Therefore, the pattern image shows long durability. Since polymeric films such as polycarbonate (PC) and polyethylene terephthalate (PET) show poor scratch resistance property, hard coatings are normally required to protect the surface of polymeric films.

To protect the surface of decorative films, hard coatings to be applied on the surface are required to be resistant to scratch, abrasion and chemical attacks. In general, good surface properties require a high crosslinking density of the coating. However, high crosslinking density leads to poor formability of coated films. During the forming process of the coated film, the coating tends to crack.

WO 2014/198739 A1 discloses transparent anti-glare films having improved scratch-, water- and solvent-resistance. These polymer films having an anti-glare surface are coated with a coating composition comprising at least one thermoplastic polymer in a content of at least 30% by weight of the solids content of the coating composition; at least one UV-curable reactive diluent in a content of at least 30% by weight of the solids content of the coating composition; at least one photoinitiator in a content of $\geq$ 0.1 to $\leq$ 10 parts by weight of the solids content of the coating composition; and at least one organic solvent; where the coating has a layer thickness in the range of $\geq$ 2 $\mu$m and $\leq$ 20 $\mu$m and the solids content of the coating composition is in the range from $\geq$ 0 to $\leq$ 40% by weight, based on the total weight of the coating composition. But it is not possible to form these films after curing especially in in-mold decoration process.

WO 2015/044137 A1 discloses a formable hard coating composition, comprising a binder, comprising at least one acrylate oligomer and at least one monofunctional acrylate monomer and a crosslinking agent, comprising at least one multifunctional acrylate or methacrylate monomer. This coating composition is applied on a coextruded PC/PMMA film resulting in a coated film, which exhibit a combination of good formability and pencil hardness, solvent and chemical resistance which makes it particular useful for applications such as in-mold decoration processes. The surfaces of those films do not exhibit anti-glare properties.

US 2012/141814 A1, US 2011/080645 A1, US 2014/133033 A1 and KR 2011 0096475 A describe further anti-glare films based on oligomers and/or acrylic monomers.

The known films having anti-glare properties on film surfaces are not suitable to be formed. By the forming process the surface is usually damaged. The so far known formable hard coating compositions are not suitable to result in an anti-glare surfaces of the film which can be formed without any cracking and damaging the edges during the forming process. For some applications it is desirable to form already cured films into a three-dimensional shape.

It is therefore a challenge to realize an anti-glare surface on polymer films resulting in a hard coated film which exhibit a good formability in particular in common molding processes such as in-mold decoration processes and having no defects especially at the edges of formed samples.

The objective of this invention was therefore to provide polymer films having an anti-glare surface in combination of good formability, pencil hardness, solvent and chemical resistance.

This objective has been surprisingly solved by a formable anti-glare polymer film wherein a thermoplastic polymeric film having at least one textured surface and a coating on the textured surface said coating being obtainable by coating with a coating composition comprising

(a) a binder, comprising at least one difunctional (meth)acrylic monomer and/or difunctional (meth)acrylate oligomer; and

(b) a crosslinking agent, comprising at least one multifunctional (meth)acrylic monomer selected from the group consisting of tri-, tetra-, penta- and hexa(meth)acrylates and mixtures of at least two thereof, wherein

said coating composition has a theoretical crosslinking density in the range of from $< 2.0 \cdot 10^{-3}$, preferably of from $\leq 1.99 \cdot 10^{-3}$ to $\geq 0.1 \cdot 10^{-3}$, more preferably of from $\leq 1.85 \cdot 10^{-3}$ to $\geq 0.2 \cdot 10^{-3}$. As used herein, (meth)acrylic refer to both acrylic and methacrylic functionality and (meth)acrylate(s) refer to both acrylate(s) and methacrylate(s).

The theoretical cross-linking density ($\chi c$), is expressed as a value between 0 and 1, with 1 representing the highly dense network. It is obvious that higher crosslinking density of a coating results in more fragile and less formable coating. Theoretical crosslinking density ($\chi c$) can be calculated from the following equations (R. Schwalm, UV Coatings-Basics, Recent Developments and New Applications, Elsevier Science, Amsterdam. (2006):

$$\chi c = \frac{1}{Mc} \qquad \text{(eq. 1)}$$

Where

$$M_c = \frac{M_0}{f_0 - 2} \qquad \text{(eq. 2)}$$

And whereby

$$M_0 = \frac{n_1 M_1 + n_2 M_2 + \cdots}{n_1 + n_2 + \cdots} \qquad \text{(eq. 3)}$$

$$f_0 = \frac{n_1 f_1 + n_2 f_2 + \cdots}{n_1 + n_2 + \cdots} \qquad \text{(eq.4)}$$

Mc is number of moles of elastically effective network chains per cubic centimetre of film;

f is the functionality of the molecule and n is the number of moles of the molecule in the whole formulation.

The coated films according to the present invention exhibit an anti-glare surface in combination with a good formablity, pencil hardness, solvent and chemical resistance. The inventive films can be formed even though the coating composition on the film has been cured by actinic radiation before the forming process without any damages at the edges of the formed article.

Furthermore the present invention provides a process for producing such formable anti-glare polymeric films as well as the molded articles comprising such films.

It is possible to use films of thermoplastics such as polycarbonate, polyacrylate or poly(meth)acrylate, polysulphones, polyesters, thermoplastic polyurethane and polystyrene, and the copolymers and mixtures (blends) thereof. Suitable thermoplastics are, for example, polyacrylates, poly(meth)acrylates (e.g. PMMA; e.g. Plexiglas™ from the manufacturer Röhm), cycloolefin copolymers (COC; e.g. Topas™ from the manufacturer Ticona; Zenoex™ from the manufacturer Nippon Zeon or Apel™ from the manufacturer Japan Synthetic Rubber), Polysulfone (Ultrason@ from BASF or Udel™ from the manufacturer Solvay), polyesters, for example PET or PEN, polycarbonate (PC), polycarbonate/polyester blends, e.g. PC/PET, polycarbonate/polycyclohexylmethanol cyclohexanedicarboxylate (PCCD; Xylecs™ from the manufacturer GE), polycarbonate/PBT and mixtures thereof.

Advantageous films have been found to be those made from polycarbonates or copolycarbonates, because of

their transparency and suitability for microstructuring for the purposes of an anti-glare configuration. Examples of polycarbonate films usable in a particularly advantageous manner for the present invention include the polycarbonate films supplied by Covestro Deutschland AG which have a microstructured surface on at least one side and a shiny or smooth surface on the other side. Said films are available under the 1-M and 1-4 names, one side having high gloss (side 1) and the other side having different microstructuring (side M or side 4). Sides M or 4 arise through the embossing action of rolls of different roughness in the course of production of the films. They differ by the mean depth or roughness depth (R3z, DIN ISO 4593) of the embossed structure.

In one embodiment of the invention the thermoplastic polymeric film comprises a coextruded polycarboante (PC) /polymethacrylate (PMMA) film.

Suitable polycarbonates are preferably high molecular weight, thermoplastic, aromatic polycarbonates with $M_w$ (weight average of the molecular weight) of at least 10 000, preferably from 20 000 to 300 000, which contain bifunctional carbonate structural units of formula (I),

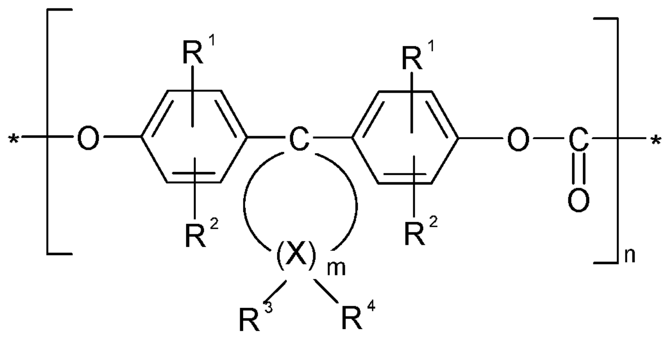

(I)

wherein

$R^1$ and $R^2$ independently of one another signify hydrogen, halogen, preferably chlorine or bromine, $C_1$-$C_8$ alkyl, $C_5$-$C_6$ cycloalkyl, $C_6$-$C_{10}$ aryl, preferably phenyl, and $C_7$-$C_{12}$ aralkyl, preferably phenyl-$C_1$-$C_4$-alkyl, particularly benzyl,

m signifies an integer of from 4 to 7, preferably 4 or 5,

$R^3$ and $R^4$ may be selected for each X individually and, independently of one another, signify hydrogen or $C_1$-$C_6$ alkyl and

X signifies carbon, and

n signifies an integer of 30 or greater, particularly preferably an integer of from 50 to 900, most particularly preferably an integer of from 60 to 250,

with the proviso that, on at least one X atom, $R^3$ and $R^4$ simultaneously signify alkyl.

Starting products for the polycarbonates are dihydroxydiphenyl cycloalkanes of the formula (Ia)

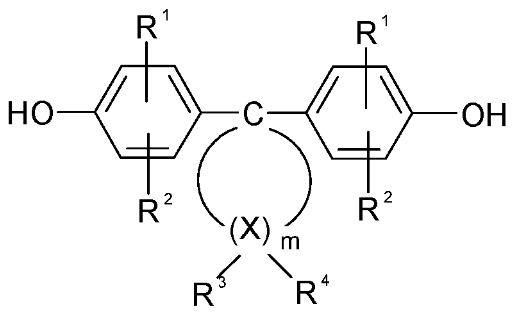

(Ia)

wherein

X, $R^1$ $R^2$, $R^3$, $R^4$, m and n have the meaning given for formula (I).

Preferably, $R^3$ and $R^4$ are simultaneously alkyl on one to two X atoms, particularly only on one X atom.

The preferred alkyl radical is methyl; the X atoms in alpha position to the diphenyl-substituted C atom (C-1) are preferably not dialkyl-substituted, however the alkyl disubstitution in beta position to C-1 is preferred.

Dihydroxydiphenyl cycloalkanes with 5 and 6 ring C atoms in the cycloaliphatic radical (m = 4 or 5 in formula (Ia)), e.g. the diphenols of formulae (Ib) to (Id), are preferred,

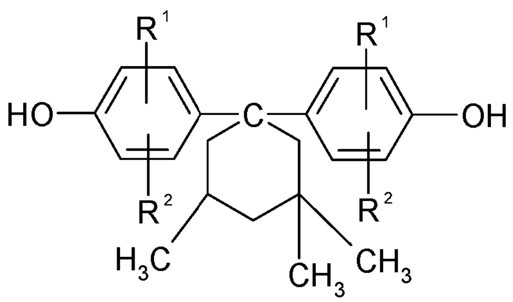

(Ib)

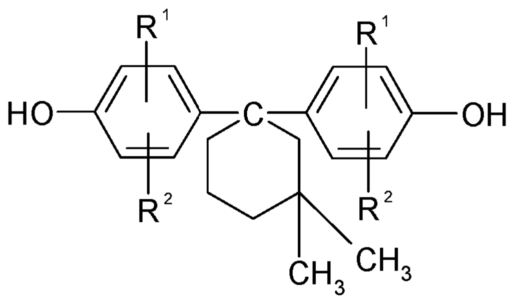

(Ic)

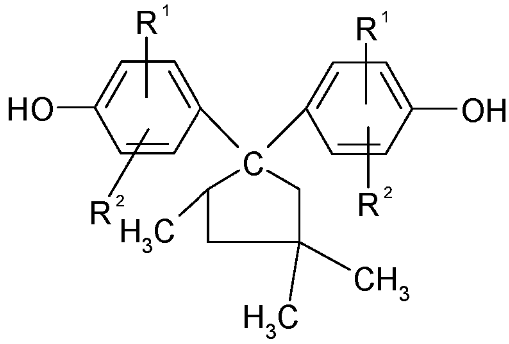

(Id)

wherein 1,1-bis(4-hydroxyphenyl)-3,3,5-trimethylcyclohexane (formula (Ib) with $R^1$ and $R^2$ equal to H) is particularly preferred. The polycarbonates can be produced in accordance with DE 3832396 or EP 0 359 953 A from diphenols of formula (Ia).

It is possible to use either one diphenol of formula (Ia) with the formation of homopolycarbonates or several diphenols of formula (Ia) with the formation of copolycarbonates.

In addition, the diphenols of formula (Ia) can also be used in a mixture with other diphenols, e.g. with those of formula (Ie)

HO-Z-OH (Ie),

for the production of high molecular weight, thermoplastic, aromatic polycarbonates.

Suitable other diphenols of formula (Ie) are those in which Z is an aromatic radical with 6 to 30 C atoms, which can contain one or more aromatic rings, can be substituted and can contain aliphatic radicals or cycloaliphatic radicals other than those of formula (Ia) or hetero atoms as bridge-type crosslinks.

Examples of the diphenols of formula (Ie) are: hydroquinone, resorcinol, dihydroxydiphenyls, bis-(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, alpha,alpha'-bis(hydroxyphenyl) diisopropylbenzenes and the ring-alkylated and ring-halogenated compounds thereof.

These and other suitable diphenols are described e.g. in US-A 3 028 365, US-A 2 999 835, US-A 3 148 172, US-A 3 275 601, US-A 2 991 273, US-A 3 271 367, US-A 3 062 781, US-A 2 970 131 and US-A 2 999 846, in DE-A 1 570 703, DE-A 2 063 050, DE-A 2 063 052, DE-A 2 211 956, Fr-A1 561 518 and in the monograph "H. Schnell, Chemistry and Physics of Polycarbonates, Interscience Publishers, New York 1964".

Preferred other diphenols are e.g.: 4,4'-dihydroxydiphenyl, 2,2-bis(4-hydroxyphenyl)propane, 2,4-bis-(4-hydroxyphenyl)-2-methylbutane, 1,1-bis(4-hydroxyphenyl)cyclohexane, alpha,alpha-bis(4-hydroxyphenyl)-p-diisopropylbenzene, 2,2-bis(3-methyl-4-hydroxyphenyl)propane, 2,2-bis(3-chloro-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)cyclohexane, alpha,alpha-bis(3,5-dimethyl-4-hydroxyphenyl)-p-diisopropylbenzene, 2,2-bis(3,5-dichloro-4-hydroxyphenyl)propane and 2,2-bis(3,5 -dibromo-4-hydroxyphenyl)propane.

Particularly preferred diphenols of formula (Ie) are e.g.: 2,2-bis(4-hydroxyphenyl)propane, 2,2-bis-(3,5-dimethyl-4-hydroxyphenyl)propane, 2,2-bis(3,5-dichloro-4-hydroxyphenyl)propane, 2,2-bis(3,5-dibromo-4-hydroxyphenyl)propane and 1,1 -bis(4-hydroxyphenyl)cyclohexane.

In particular, 2,2-bis(4-hydroxyphenyl)propane is preferred. The other diphenols can be used either individually or in a mixture.

The molar ratio of diphenols of formula (Ia) to the other diphenols of formula (Ie) optionally also used, should be between 100 mole % (Ia) to 0 mole % (Ie) and 2 mole % (Ia) to 98 mole % (Ie), preferably between 100 mole % (Ia) to 0 mole % (Ie) and 10 mole % (Ia) to 90 mole % (Ie) and particularly between 100 mole % (Ia) to 0 mole % (Ie) and 30 mole % (Ia) to 70 mole % (Ie).

The high molecular weight polycarbonates made from the diphenols of formula (Ia), optionally in combination with other diphenols, can be produced by the known polycarbonate production processes. The various diphenols in this case can be connected to one another either randomly or in blocks.

The polycarbonates according to the invention can be branched in a manner that is known per se. If branching

is desired, it can be achieved in a known manner by incorporation by condensation of small quantities, preferably quantities of between 0.05 and 2.0 mole % (based on diphenols used), of trifunctional or more than trifunctional compounds, particularly those with three or more than three phenolic hydroxyl groups. Suitable branching agents with three or more than three phenolic hydroxyl groups are:
phloroglucinol, 4,6-dimethyl-2,4,6-tri-(4-hydroxyphenyl)heptene-2, 4,6-dimethyl-2,4,6-tri-(4-hydroxyphenyl)heptane, 1,3,5-tri-(4-hydroxyphenyl)benzene, 1,1,1-tri-(4-hydroxyphenyl)ethane, tri-(4-hydroxyphenyl)phenylmethane, 2,2-bis-[4,4-bis(4-hydroxyphenyl)cyclohexyl]propane, 2,4-bis(4-hydroxyphenylisopropyl)phenol, 2,6-bis-(2-hydroxy-5 -methylbenzyl)-4-methylphenol, 2-(4-hydroxyphenyl)-2-(2,4-dihydroxyphenyl)propane, hexa-[4-(4-hydroxyphenylisopropyl)phenyl]-ortho-terephthalic acid ester, tetra-(4-hydroxyphenyl)methane, tetra-[4-(4-hydroxyphenyl-isopropyl)-phenoxy]methane and 1,4-bis-[4',4"-dihydroxytriphenyl)methyl]benzene.

Some of the other trifunctional compounds are 2,4-dihydroxybenzoic acid, trimesic acid, cyanuric chloride and 3,3-bis(3-methyl-4-hydroxyphenyl)-2-oxo-2,3-dihydroindole.

As chain terminators for the regulation of the molecular weight of the polycarbonates, which is known per se, monofunctional compounds are used in conventional concentrates. Suitable compounds are e.g. phenol, tert.-butylphenols or other alkyl-substituted phenols. To regulate the molecular weight, small quantities of phenols of formula (If) are particularly suitable

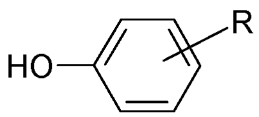

(If)

wherein
R represents a branched $C_8$ and/or $C_9$ alkyl radical.

The proportion of $CH_3$ protons in the alkyl radical R is preferably between 47 and 89 % and the proportion of CH and $CH_2$ protons between 53 and 11 %; it is also preferred for R to be in o- and/or p-position to the OH group, and particularly preferred for the upper limit of the ortho fraction to be 20 %. The chain terminators are generally used in quantities of 0.5 to 10, preferably 1.5 to 8 mole %, based on diphenols used.

The polycarbonates can preferably be produced by the interfacial polycondensation process (cf. H. Schnell "Chemistry and Physics of Polycarbonates", Polymer Reviews, vol. IX, page 33 et seq., Interscience Publ. 1964) in a manner that is known per se.

In this process, the diphenols of formula (Ia) are dissolved in an aqueous alkaline phase. To produce copolycarbonates with other diphenols, mixtures of diphenols of formula (Ia) and the other diphenols, e.g. those of formula (Ie), are used. To regulate the molecular weight, chain terminators e.g. of formula (If) can be added. Then, in the presence of an inert organic phase, preferably one which dissolves polycarbonate, a reaction with phosgene is carried out by the interfacial polycondensation method. The reaction temperature is between 0°C and 40°C.

The branching agents that are optionally also used (preferably 0.05 to 2.0 mole %) can either be initially present in the aqueous alkaline phase with the diphenols or added in solution in the organic solvent before phosgenation. In addition to the diphenols of formula (Ia) and optionally other diphenols (Ie), it is also possible to incorporate their mono- and/or bischlorocarbonates, these being added in solution in organic solvents. The quantity of chain terminators and branching agents then depends on the molar amount of diphenolate groups according to formula (Ia) and optionally formula (Ie); when chlorocarbonates are incorporated, the amount of phosgene can be reduced accordingly in a known manner.

Suitable organic solvents for the chain terminators and optionally for the branching agents and the chlorocarbonates are e.g. methylene chloride and chlorobenzene, particularly mixtures of methylene chloride and chlorobenzene. The chain terminators and branching agents used may optionally be dissolved in the same solvent.

Methylene chloride, chlorobenzene and mixtures of methylene chloride and chlorobenzene, for example, are used as the organic phase for the interfacial polycondensation.

NaOH solution, for example, is used as the aqueous alkaline phase. The production of the polycarbonates by the interfacial polycondensation process can be catalysed in a conventional manner by catalysts such as tertiary amines, particularly tertiary aliphatic amines such as tributylamine or triethylamine; the catalysts can be used in quantities of from 0.05 to 10 mole %, based on moles of diphenols used. The catalysts can be added before the beginning of phosgenation or during or even after phosgenation.

The polycarbonates can be produced by the known process in the homogeneous phase, the so-called "pyridine

process", and by the known melt transesterification process using, for example, diphenyl carbonate instead of phosgene.

The polycarbonates preferably have a molecular weight $M_w$ (weight average, determined by gel permeation chromatography after previous calibration) of at least 10 000, particularly preferably from 20 000 to 300 000 and particularly from 20 000 to 80 000. They can be linear or branched and they are homopolycarbonates or copolycarbonates based on the diphenols of formula (Ia).

By means of the incorporation of the diphenols of formula (Ia), novel polycarbonates with high heat resistance have been created, which also have a good property profile in other respects. This is particularly true of the polycarbonates based on the diphenols of formula (Ia) in which m is 4 or 5, and most particularly for the polycarbonates based on the diphenols (Ib), wherein $R^1$ and $R^2$ independently of one another have the meaning given for formula (Ia) and are particularly preferably hydrogen.

The particularly preferred polycarbonates are therefore those in which structural units of formula (I) m = 4 or 5, most particularly those of units of formula (Ig)

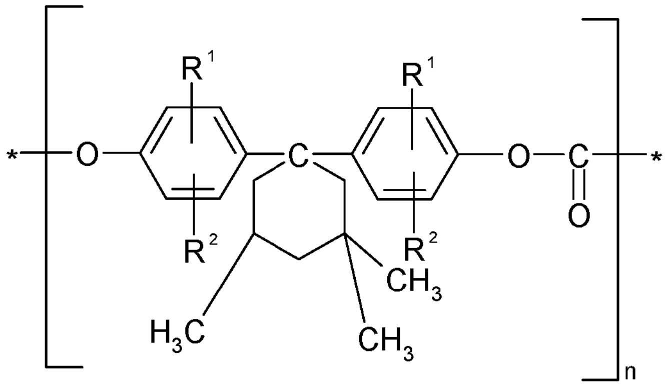

(Ig)

wherein $R^1$ $R^2$ and n have the meaning given for formula (I) but are particularly preferably hydrogen.

These polycarbonates based on diphenols of formula (Ib), wherein in particular $R^1$ and $R^2$ are hydrogen, possess, in addition to their high heat resistance, good UV stability and good flow properties in the melt, which was not to be expected, and display very good solubility in the monomers mentioned below.

In addition, by means of composition with other diphenols as desired, particularly with those of formula (Ie), the polycarbonate properties can be favourably varied. In these copolycarbonates, the diphenols of formula (Ia) are contained in quantities of from 100 mole % to 2 mole %, preferably in quantities of from 100 mole % to 10 mole % and particularly in quantities of from 100 mole % to 30 mole %, based on the total quantity of 100 mole % of diphenol units, in polycarbonates.

Particularly preferred polycarbonates are copolycarbonates of formula (I-h), wherein the comonomers can be in an alternating, block or random arrangement in the copolymer, p + q = n and the ratio of q and p to one another behaves as reflected by the mole % data mentioned in the previous section for formulae (Ie) and (Ia).

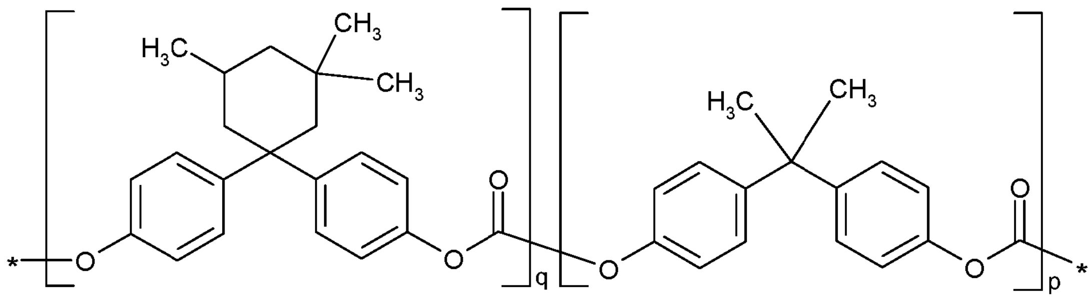

(I-h)

In one embodiment of the invention the formable hard coated films according to the present invention comprise a PMMA layer either on one or on both sides of the PC film layer.

The PMMA layer has preferably a thickness of ≥ 15 μm to ≤ 60 μm, preferably of ≥ 30 μm to ≤ 55 μm, more preferably of ≥ 40 to ≤ 52 μm. With a coating according to the present invention and a PMMA layer of the base film having the above-mentioned preferred thicknesses, an advantageous combination of pencil hardness of more than 2 H and good formability of the coated film can be achieved.

With respect to the thickness of the respective layers of the coated film according to the present invention, the thickness of the PC layer may be in the range of from 50 to 700 μm, preferably in the range of from 60 to 450 μm and more preferably in the range of from 80 to 300 μm, the thickness of the PMMA layer is as described above. A typical coated film according to the present invention would comprise a PC layer having a thickness in the range of from 80 to 300 μm, a PMMA layer in the range of from 40 to 52 μm and a top layer consisting of the formable hard coating having a dry film thickness according to ASTM B499 in the range of from ≥ 0.5 to ≤ 6 μm.

PMMA as used herein generally means polymethylmethacrylate, in particular polymethylmethacrylate homopolymers and copolymers based on methylmethacrylate having a methylmethacrylate content of at least 70 wt.-%. For example, such PMMAs are available under the trademarks Degalan™, Degacryl™, Plexyglas™, Acrylite™ (Fa. Evonik), Altuglas, Oroglas (Arkema), Flvacite Colacryl™, Lucite™ (Lucite) and under the names Acrylglas, Conacryl, Deglas, Diakon, Friacryl, Hesaglas, Limacryl, PerClax and Vitroflex.

Preferably, the PMMA layer of the PC/PMMA base film of the film according to the present invention can comprise PMMA homopolymers and/or copolymers comprising 70 wt.-% to 99.5 wt-% methylmethacrylate and 0.5 wt.-% to 30 wt.-% methacrylate. Particularly preferred are PMMA homopolymers and/or copolymers comprising 90 wt.-% to 99.5 wt-% methylmethacrylate and 0.5 wt.-% to 10 wt.-% methacrylate. The softening points VET (ISO 306) may be in the range of from at least 90 °C, preferably of from ≤ 100°C to ≥ 115°C. The molecular weight of the PMMA homopolymers and copolymers may be at least 150,000 and preferably at least 200,000. The molecular weights may be determined, for example, by means of gel permeation chromatography or scattered light (see, for example, H. F. Mark et al., Encyclopedia of Polymer Science and Engineering, 2nd. Edition, Vol. 10, p.1, J. Wiley, 1989).

The particularly advantageous coextruded PC/PMMA films have a microstructured surface on the PMMA side and a shiny or smooth surface on the PC side in order to achieve the anti-glare configuration of the film. Said films are available under the 1-M and 1-4 names, one side having high gloss (side 1) and the other side having different microstructuring (side M or side 4). Sides M or 4 arise through the embossing action of rolls of different roughness in the course of production of the films. They differ by the mean depth or roughness depth (R3z, DIN ISO 4593) of the embossed structure.

A suitable definition of microstructuring in the context of the present invention is advantageously the term "roughness", as used in DIN ISO 4593. According to DIN ISO 4593, the roughness of a surface is defined by the parameters Ra and R3z. Ra is the arithmetic mean of the absolute value of the profile deviations within the reference distance. R3z is the arithmetic mean of the greatest individual roughnesses from a plurality of adjacent individual measurement distances. Hereinafter, the parameter R3z, which can be determined in a reproducible manner to DIN ISO 4593, will be used to define the roughness and hence the microstructuring of the film surface.

The inventive concept is based on the roughness of the upper surface of the coating, which arises through the given roughness of the substrate to be coated. It has been found that an anti-glare configuration of the at least one surface of the inventive coated film can be achieved particularly advantageously when the at least one surface of the uncoated film has a roughness depth R3z according to DIN ISO 4593 in the range of ≥ 500 and ≤ 4000 nm, preferably in the range of ≥ 700 and ≤ 3600 nm, more preferably in the range of ≥ 800 and ≤ 1500 nm, or in the range of ≥ 2000 and ≤ 8000, preferably in the range of ≥ 3000 and ≤ 6500 nm.

Coextrued PC/PMMA films which may serve as base films in the coated film according to the present invention are for example available under the trademark Makrofol™ from Covestro Deutschland AG.

The preferred coextruded PC/PMMA films having a microstructured surface on the PMMA side as described above can be then coated on the PMMA-side with a coating composition. A particular challenge for the person skilled in the art was to coat the surface of a film to which anti-glare properties have been imparted in this way such that a certain scratch resistance and solvent resistance is firstly achieved, but anti-glare properties are maintained and which can be formed in a later thermoforming process without any cracking and damaging the edges during the forming process. The coating composition comprises

(a) a binder, comprising at least one difunctional (meth)acrylic monomer and/or difunctional (meth)acrylate oligomer; and

(b) a crosslinking agent, comprising at least one multifunctional (meth)acrylic monomer selected from the group consisting of tri-, tetra-, penta- and hexa(meth)acrylates and mixtures of at least two thereof,

wherein said coating composition has a theoretical crosslinkingdensity in the range of from < 2.0 · $10^{-3}$, preferably of from ≤ 1.99 · $10^{-3}$ to ≥ 0.1 · $10^{-3}$, more preferably of from ≤ 1.85 · $10^{-3}$ to ≥ 0.2 . $10^{-3}$

As the difunctional (meth)acrylic monomer and/or difunctional (meth)acrylate oligomer (component a) of the coating composition) any (meth)acrylic monomer and /or (meth)acrylate oligomer known in the art may be employed.

Difunctional (meth)acrylic monomers are for example 1,2 propanediol diacrylate, 1,3 butandiol dimethacrylate, 1,3 glyceryl dimethacrylate, 1,6 hexandiol dimethacrylate, diethyleneglycol dimethacrylate.

Difunctional (meth)acrylate oligomers can be oligomers of polyester (meth)acrylates, polyether (meth)acrylates, polyacryl (meth)acrylates and urethane (meth)acrylates. In general, oligomers are described in Chemistry & Technology of UV & EB Formulation for Coatings, Inks & Paints, Vol. 2, 1991, SITA Technology, London (P.K.T: Oldring (Ed.) p. 73-123 (urethane acrylates) and p.123-135 (polyester acrylates), respectively. In one embodiment of the formable hard coat composition of the present invention a) is selected of the group consisting of 2 propanediol diacrylate, 1,3 butandiol dimethacrylate, 1,3 glyceryl dimethacrylate, 1, 6 hexandiol dimethacrylate, diethyleneglycol dimethacrylate and mixtures thereof and/or selected from the group consisting of polyester (meth)acrylates oligomers, polyacryl (meth)acrylates oligomers, urethane (meth)acrylates oligomers and mixtures of at least two thereof, preferably at least one urethane (meth)acrylate oligomer.

In one preferred embodiment of the formable hard coat composition of the present invention a) is selected from the group consisting of polyester (meth)acrylate oligomers, polyacryl (meth)acrylate oligomers, urethane (meth)acrylate oligomers, and mixtures of at least two thereof, preferably at least one urethane (meth)acrylate oligomer.

The difunctional (meth)acrylic oligomers may be some commercially available urethane (meth)acrylate solutions, e.g, Laromer™ 8987 (70 % in hexandioldiacrylat) of BASF SE, Desmolux™ U 680 H (80 % in hexandioldiacrylate) of Allnex S.d r.l., Craynor™ 945B85 (85 % in hexandioldiacrylate), Ebecryl™ 294/25HD (75 % in hexandioldiacrylate), Ebecryl™ 8405 (80 % in hexandioldiacrylate), Ebecryl™ 4820 (65 % in hexandioldiacrylate) (Allnex S.à.r.l) of Craynor™ 963B80 (80 % in hexandioldiacrylate) of Cray Valley or polyester (meth)acrylates such as Ebecryl™ 810, 830 or polyacryl (meth)acrylates such as Ebecryl™, 740, 745, 767 or 1200 from Allnex S.à.r.l., UA 122P (Shin Nakamura, Japan).

As the at least one multifunctional (meth)acrylic monomer for the crosslinking agent, component b) of the formable hard coating composition according to the present invention, trifunctional, tetrafunctional, pentafunctional or hexafunctional (meth)acrylic monomers and mixtures therefrom are preferably suited. Suitable multifunctional (meth)acrylic monomers can be (meth)acrylicesters deriving from aliphatic polyhydroxy compounds having at least 2, preferably at least 3 and more preferably at least 4 hydroxy groups and preferably of from 2 to 12 carbon atoms.

Examples for these aliphatic polyhydroxy compounds are ethyleneglycol, propylenglycol, butanediol-1,4, hexanediol-1,6, diethyleneglycol, triethyleneglycol, glycerine, trimethylolpropane, pentaerythrit, dipentaerythrit, tetramethylolethane and sorbitol.

Examples for the respective esters of these compounds are trimethylolpropane-tiacrylate or - trimethacrylate, glycerinetriacrylate or -trimethacrylate, pentaerythrit-tetraacylate or - tetramethacrylate, dipentaerythrit-penta/hexaacylate (DPHA), 1,2,3,4-butanetetraol-tetraacylate or - tetramethacrylate, tetramethylolethan-tetraacrylate or -tetramethacrylate, 2,2-dihydroxy-propanediol-1,3-tetraacrylate or -tetramethacrylate, diurethanedimethacrylate (UDMA), sorbitantetra-, -penta- or -hexa-acrylate or the corresponding methacrylates and mixtures of at least two thereof.

Examples for alkoxylated tri(meth)acrylates are alkoxylated, preferably ethoxylated pentaerythrit-triacrylate, pentaerythrit-trimethacrylate, glycerinetriacrylate, glycerinetrimethacrylate, 1,2,4-butanetrioltriacrylate, 1,2,4-butanetrioltrimethacrylate, trimethylolpropanetriacrylate, trimethylolpropanetrimethacrylate, tricyclodecanedimethanoldiacrylate, tricyclodecanedimethanoldimethacrylate, ditrimethylolpropanetetraacrylate or ditrimethylolpropanetetramethacrylate.

Examples for alkoxylated tetra-, penta- or hexaacrylates are alkoxylated, preferably ethoxylated pentaerythrit-tetraacrylate, dipentaerythrit-tetraacrylate, dipentaerythrit-pentaacrylate, dipentaerythrit-hexaacrylate, pentaerythrit-tetramethacrylate, dipentaerythrit-tetramethacrylate, dipentaerythrit-pentamethacrylate or dipentaerythrit-hexamethacrylate.

The theoretical crosslinkingdensity of the coating composition lies in the range of from < 2.0 · $10^{-3}$, preferably of from ≤ 1.99 · $10^{-3}$ to ≥ 0.1 · $10^{-3}$, more preferably of from ≤ 1.85 · $10^{-3}$ to ≥ 0.2 . $10^{-3}$

The aforementioned described coating composition can be applied on the thermoplastic film, preferably a thermoplastic film comprising polycarbonate, more preferably a coextruded PC/PMMA thermoplastic film on the textured surface of the film by conventional methods for coating films with fluid coating compositions, for example by knife-coating, spraying, pouring, flow-coating, dipping, rolling or spin-coating. The coating can have a dry film thickness according to ASTM B499 in the range of from ≥ 0.5 to ≤ 6 μm, preferably in the range of from ≥ 0.7 to ≤ 3 μm, and preferably has a crosslinking density in the range of from < 2.0 · $10^{-3}$, preferably of from ≤ 1.99 · 10-3 to ≥ 0.1 · $10^{-3}$, more preferably of from ≤ 1.85 · $10^{-3}$ to ≥ 0.2 . $10^{-3}$.

In one embodiment of the invention the inventive films exhibit an elongation at break determined according to DIN ISO 573-2 of the coated film is ≥ 3.0 %, preferably ≥ 3.2 %, more preferably ≥ 3.5 %.

In another embodiment of the invention the inventive films exhibit an an elongation at break determined according to DIN ISO 573-2 of the coated film is in the range of from ≥ 3.0 % to ≤ 15.0 %, preferably of from ≥ 3.2 % to ≤ 10.0 %,

more preferably of from ≥ 3.5 % to ≤ 6.0 %. The present invention is further directed to a process for producing an inventive formable anti-glare polymeric film, comprising the steps of:

(i) providing a thermoplastic polymeric film having at least one textured surface;
(ii) coating the film on the side of the textured surface with a coating composition comprising

(a) a binder, comprising at least one difunctional (meth)acrylic monomer and/or difunctional (meth)acrylate oligomer; and
(b) a crosslinking agent, comprising at least one multifunctional (meth)acrylic monomer selected from the group consisting of tri-, tetra-, penta- and hexa(meth)acrylates and mixtures of at least two thereof, wherein said coating composition has a theoretical crosslinking density in the range of from < $2.0 \cdot 10^{-3}$, preferably of from ≤ $1.99 \cdot 10^{-3}$ to ≥ $0.1 \cdot 10^{-3}$, more preferably of from ≤ $1.85 . 10^{-3}$ to ≥ $0.2 \cdot 10^{-3}$.

(ii) curing the coated film with actinic radiation, receiving a cured film,
(iii) optionally thermally or mechanically forming of the cured film;

The thermoplastic film as well as the coating composition have been previously described and it is therefore referenced to the previous description in order to avoid reiteration.

Curing with actinic radiation is understood to mean the free-radical polymerization of ethylenically unsaturated carbon-carbon double bonds by means of initiator radicals which are released, for example, from the above-described photoinitiators through irradiation with actinic radiation.

The radiative curing is preferably effected by the action of high-energy radiation, i.e. UV radiation or daylight, for example light of wavelength ≥ 200 nm to ≤ 750 nm, or by irradiation with high-energy electrons (electron beams, for example ≥ 90 keV to ≤ 300 keV). The radiation sources used for light or UV light are, for example, moderate- or high-pressure mercury vapour lamps, wherein the mercury vapour may be modified by doping with other elements such as gallium or iron. Lasers, pulsed lamps (known by the name UV flashlight emitters), halogen lamps or excimer emitters are likewise usable. The emitters may be installed at a fixed location, such that the material to be irradiated is moved past the radiation source by means of a mechanical device, or the emitters may be mobile, and the material to be irradiated does not change position in the course of curing. The radiation dose typically sufficient for crosslinking in the case of UV curing is in the range from ≥ 80 mJ/cm2 to ≤ 5000 mJ/cm2.

In a preferred embodiment, the actinic radiation is therefore light in the UV light range.

The radiation can optionally be performed with exclusion of oxygen, for example under inert gas atmosphere or reduced-oxygen atmosphere. Suitable inert gases are preferably nitrogen, carbon dioxide, noble gases or combustion gases. In addition, the radiation can be effected by covering the coating with media transparent to the radiation. Examples thereof are polymer films, glass or liquids such as water.

According to the radiation dose and curing conditions, the type and concentration of any initiator used can be varied or optimized in a manner known to those skilled in the art or by exploratory preliminary tests. For curing of the formed films, it is particularly advantageous to conduct the curing with several emitters, the arrangement of which should be selected such that every point on the coating receives substantially the optimal radiation dose and intensity for curing. More particularly, unirradiated regions (shadow zones) should be avoided.

The inventive films can be formed thermally or mechanically by methods which are well known to the skilled in the art.

The present invention further provides an article, comprising at least one coated film according to the present invention. Preferably, the article is obtained in an in-mold decoration process. In-mold decoration processes are well-known in the art. The skilled person can easily select the process for forming the desired molded article. By employing the coated film according to the present invention, the surface of said article exhibits the advantageous properties of the coated film, such as pencil hardness and resistance to abrasion, solvents and chemicals.

Preferably, the article is a mobile phone, a lens integrated housing, a notebook, a netbook, a computer, a TV, a household device, an interior part of a vehicle, or a body part of a vehicle. In these articles, the favorable combination of properties of the coated film according to the present invention also give rise to advantageous combinations of properties which are in most cases important in everyday use of the articles, in particular scratch, abrasion and solvent resistance.

Accordingly, the present invention further relates to the use of the coating composition according to the present invention and/or of the coated film according to the present invention for the manufacture of a molded article, in particular a mobile phone, a lens integrated housing, a notebook, a netbook, a computer, a TV, a household device, an interior part of a vehicle, or a body part of a vehicle, preferably in an in-mold decoration process.

Furthermore the present invention relates to the use of a coating composition according to present claim 14.

## Examples

### Thermoplastic Films:

Makrofol™ SR908: co-extruded PC/PMMA film which has a glossy PC layer and rough PMMA layer of total thickness 250 μm (with 50μm PMMA layer) from Covestro Deutschland AG.
Makrofol™ SR253: co-extruded PC/PMMA film which has a gloss-gloss finish of total thickness 250 μm (with 50μm PMMA layer) from Covestro Deutschland AG.

Elongation at Break Measurement:

The elongation at break was measured according to DIN ISO 572-2 standard.

Calculation of Theoretical Cross Linking Density

The crosslinking densities were determined as described in R. Schwalm, UV Coatings-Basic, Recent Developments and New Applications, Elsevier Science, 2006, Amsterdam; Chen et al. Progress in Organic Coatings 55, 2006, p. 291 to 295 as described above.

Assessment of optical properties

The transmission and the haze were determined to ASTM-D2457 with a BYK Haze Gard (from BYK, Germany).
For the determination of the further optical parameters of, DOI and Rs, the SMS 1000 (Sparkle Measurement System) from DM&S (Germany) was used.

### Preparation of the Coated films

The coating formulations were applied in a roll to roll process using a kiss coater at a web speed of 1 - 2 m/min. The solvents were removed in a series of dryers which were set at about a temperature of 60°C. The circulated air speed was in the range 3 - 6 m/sec. The coating was cured using a UV lamp with a 550 mJ/cm2 under inert conditions.

### Example 1:

About 40.65 g of UA122P (difunctional urethane acrylate supplied by Shin Nakamura, Japan) was weighed in a vessel and 30 g of 1-methoxy-2-propanol was added. The mixture was stirred until a homogenous solution emerged. To this solution 27.18 g of PETIA (pentaerythritol triacrylate from Allnex S.à r.l) and 0.11 g of Additol™ VXL 4930 (from Allnex S.à r.l) were added. The mixture was stirred for another 15 minutes to ensure a homogenous solution, after which 2.06 g of Irgacure™ 184 (photo-initiator from BASF SE) was added. The theroretical crosslinking density was calculated to be $1.81 \cdot 10^{-3}$.
The liquid formulation was applied to the Makrofol™ 908 substrate on the rough PMMA side as described above. The elongation at break of the coated film was 3.9 %.

### Example 2 (comparative):

A film as described in Example 1 has been prepared but the film used was Makrofol™ SR253.
The elongation at break of the coated film was 3.5 %. This coated film does not show anti-glare properties.

### Example 3 (comparative):

About 27.18 g of UA122P (Urethane Acrylate supplied by Shin Nakamura, Japan) was weighed in a vessel and 30 g of 1-methoxy-2-propanol was added. The mixture was stirred until a homogenous solution emerged. To this solution 40.65 g of PETIA (pentaerythritol triacrylate from Allnex S.à r.l) and 0.11 g of Additol™ VXL 4930 (from Allnex S.à r.l) were added. The mixture was stirred for another 15 minutes to ensure a homogenous solution, after which 2.06 g of Irgacure™ 184 (photo-initiator from BASF SE) was added. The theroretical crosslinking density was calculated to be $2.71 \cdot 10^{-3}$.
The liquid formulation was applied to the Makrofol™ 908 substrate on the rough PMMA side as provided above. The elongation at break of the coated film was 2.9 %.

**Example 4 (comparative)**

A liquid formulation consisting of 80.36 wt.-% of PETIA (pentaerythritol triacrylate from Allnex S.à r.l), 9.45 wt.-% Desmolux™ U680H (from Allnex S.à r.l), 4.73wt.-% 1,6 - Hexanediol Diacrylate (HDDA from Allnex S.à.r.l.), 0.66 wt.-% BYK™ 306 (additive from BYK) and 4.73wt.-% Irgacure™ 184 (photoinitiator from BASF SE) was prepared by sequential mixing of the ingredients. This formulation was later diluted down to a solid content of 30 wt.-% using 1 - methoxy propan-2-ol solvent. The theroretical crosslinking density was calculated to be $3.87 \cdot 10^{-3}$.

The liquid formulation was applied to the Makrofol™ 908 substrate on the rough PMMA side as provided above. The elongation at break of the coated film was 2.8 %.

**Example 5 (comparative)**

A liquid formulation consisting of 57.42 wt.-% of Ebycryl™ 1290, 33.66% PETIA (pentaerythritol triacrylate from Allnex S.à r.l), 2.97 wt.-% Laurylacrylat 1214, 1.0wt.-% BYK™306 (an additive from BYK) and 4.95% Irgacure™ 184 (a photoinitiator from BASF SE) was prepared by sequential mixing of the ingredients. This formulation was later diluted down to a solid content of 50 wt.-% using 1 - methoxy propan-2-ol solvent. The theroretical crosslinking density was calculated to be $4.13 . 10^{-3}$.

The liquid formulation was applied to the Makrofol™ 908 substrate on the rough PMMA side as provided above. The elongation at break of the coated film was 2.5 %.

**Forming process of the coated films from Examples 1 to 5**

The formability of the coated films (Examples 1 to 5) was evaluated by a high pressure forming (HPF) process using a forming tool of a three dimensional shape with depth profiles of 6 to 8 mm with various forming radii ranging from 0.5mm to 6.0 mm.

Before testing, the coated films were conditioned at 23 ± 2 °C and at a relative humidity of 50 ± 5 % for a minimum period of 15 h. The high pressure forming process parameters are listed in Table 1:

**Table 1:** Parameters for the forming process

| **HPF Forming Conditions** | |
|---|---|
| Parameters | |
| IR Temperature (°C) | 350 |
| IR Heating Time (seconds) | 15 |
| IR Holding time (seconds) | 4 |
| Up Mold Temperature (°C) | 110 |
| Down Mold Temperature (°C) | 110 |
| Pressure (bar) | 40 |
| Pressure keeping time (seconds) | 2 |
| Cooling time (seconds) | 3 |

The uncoated substrates Makrofol™ SR908 (SR 908) had an elongation of break of 4.9 % and Makrofol™ SR253 (SR253) had an elongation of break of 4.3 %. Thus the change in the microstructure of the uncoated films alone offers an enhanced elongation at break property for Makrofol™ SR908 in comparison to Makrofol™ SR253.

The same phenomenon is exhibited when a suitable coating is applied to the films. When the same coating formulation is applied on Makrofol™ SR908 and Makrofol™ SR253 substrates (as described in Examples 1 and Example 2, respectively), the former sample results in an anti-glare film while the latter results in a clear transparent film with no antiglare effect. This is obvious from the haze and reflection measurement of the films. Films illustrated in Example 1 show a haze of about 8.55 % while that in Example 2 show a haze of about 0.23 %. In addition, the reflection of the film described in Example 1 is about 8 times lower than that of Example 2. This shows the efficiency of glare suppression in the films produced in Example 1.

Comparing antiglare films made out of Example 1 to those of comparative Example 3, 4 and 5 (wherein the theoretical crosslinking density was higher than $2.0\ 10^{-3}$) which where subjected to similar forming conditions, it was noticed that the formability of Example 1 was far more superior than the comparative Examples 3, 4, and 5. Typically,

the films made from comparative Examples 3, 4 and 5 showed defects like cracking at the formed side and such a defect was not visible in Example 1. Figure 1 shows the microscopic examination of the edges of the high pressure formed samples which have been made using the coated films of Example 1 showing no defects and such of Examples 4 and 5 (both comparative examples) showing defects.

The base film SR908 doesn't qualify as an antiglare film owing to the fact that it shows poor distinctness of Image (DOI).

The optical and formability properties of the coated films (Examples 1 to 5) are summarized in Table 2 and the overall results are summarized in Table 3.

**Table 2:** optical and formability properties of the coated films (Examples 1 to 5)

| | **Example 1** | **Example 2** | **Example 3** | **Example 4** | **Example 5** | **SR 908** |
|---|---|---|---|---|---|---|
| % Light Transmission | 92.3 | 92.5 | 92.3 | 92.3 | 92.3 | 91.6 |
| % Haze | 8.55 | 0.23 | 8.9 | 8.34 | 9.37 | 65.8 |
| Clarity | 53.4 | 100 | 64.8 | 55.1 | 52.5 | 18.3 |
| DOI (190 dpi) | 0.982 | 0.990 | 0.971 | 0.979 | 0.975 | 0.720 |
| Reflection (Rs) | 0.0127 | 0.0816 | 0.165 | 0,0161 | 0.0143 | 0.0027 |
| Formability | Yes | No | No | No | No | Not applicable |

**Table 3:** Summary of the results

| **Sample Name** | **Elongation at Break (MD, [%])** | **Theoretical Crosslinking Density** | **Antiglare Effect** | | **Formability** |
|---|---|---|---|---|---|
| | | | Reflection Rs | DOI | |
| Example 5 (comp.) | 2.5 | 4.13E-03 | ✓ | ✓ | × |
| Example 4 (comp.) | 2.8 | 3.87E-03 | ✓ | ✓ | × |
| Example 3 (comp.) | 2.9 | 2.71E-03 | ✓ | ✓ | × |
| Example 2 (comp.) | 3.5 | 1.81E-03 | × | ✓ | ✓ |
| Example 1 | 3.9 | 1.81E-03 | ✓ | ✓ | ✓ |
| Makrofol™ SR253 | 4.3 | Not Applicable | × | ✓ | ✓ |
| Makrofol™ SR908 | 4.9 | Not Applicable | ✓ | × | ✓ |
| Comp. = comparative, ✓ = requirement fulfilled ; × = requirement failed | | | | | |

## Claims

1. A formable anti-glare polymer film wherein a thermoplastic polymeric film having at least one textured surface and a coating on the textured surface said coating being obtainable by coating with a coating composition comprising

(a) a binder, comprising at least one difunctional (meth)acrylic monomer and/or difunctional (meth)acrylate oligomer; and
(b) a crosslinking agent, comprising at least one multifunctional (meth)acrylic monomer selected from the group consisting of tri-, tetra-, penta- and hexa(meth)acrylates and mixtures of at least two thereof,

wherein said coating composition has a theoretical crosslinking density ($\chi c$) in the range of from < 2.0 - $10^{-3}$, preferably of from ≤ 1.99 · $10^{-3}$ to ≥ 0.1 · $10^{-3}$, more preferably of from ≤ 1.85 · $10^{-3}$ to ≥ 0.2 · $10^{-3}$, wherein the theoretical crosslinking density is calculated from the following equation:

$$\chi c = \frac{1}{Mc}$$

where

$$M_c = \frac{M_0}{f_0 - 2}$$

and whereby

$$M_0 = \frac{n_1 M_1 + n_2 M_2 + \cdots}{n_1 + n_2 + \cdots} \text{ and } f_0 = \frac{n_1 f_1 + n_2 f_2 + \cdots}{n_1 + n_2 + \cdots},$$

Mc is number of moles of elastically effective network chains per cubic centimetre of film, f is the functionality of the molecule and n is the number of moles of the molecule in the whole formulation

2. The formable anti-glare polymer film according to claim 1, wherein the elongation at break determined according to DIN ISO 573-2 of the coated film is ≥ 3.0 %, preferably ≥ 3.2 %, more preferably ≥ 3.5 %.

3. The formable anti-glare polymer film according to claim 1 or 2, wherein the thermoplastic film comprises polycarbonate, polyacrylate or poly(meth)acrylate, polysulphones, polyesters, thermoplastic polyurethane and polystyrene, and the copolymers and mixtures (blends) thereof.

4. The formable anti-glare polymer film according to any of claims 1 to 3, wherein the thermoplastic film comprises a polycarbonate.

5. The formable anti-glare polymer film according to any of claims 1 to 4, wherein the uncoated thermoplastic film has a roughness R3z according to DIN ISO 4593 in the range of from ≥ 500 nm and ≤ 4000 nm or in the range of from ≥ 2000 nm and ≤ 8000 nm.

6. The formable anti-glare polymer film according to any of claims 1 to 5, wherein a) is selected of the group consisting of 2 propanediol diacrylate, 1,3 butandiol dimethacrylate, 1,3 glyceryl dimethacrylate, 1, 6 hexandiol dimethacrylate, diethyleneglycol dimethacrylate and mixtures thereof and/or selected from the group consisting of polyester (meth)acrylates oligomers, polyacryl (meth)acrylates oligomers, urethane (meth)acrylates oligomers and mixtures of at least two thereof, preferably at least one urethane (meth)acrylate oligomer.

7. The formable anti-glare polymer film according to any of claims 1 to 6, wherein a) is selected from the group consisting of polyester (meth)acrylates oligomers, polyacryl (meth)acrylates oligomers, urethane (meth)acrylates oligomers and mixtures of at least two thereof, preferably at least one urethane (meth)acrylate oligomer.

8. The formable anti-glare polymer film according to any of claims 1 to 7, wherein b) is selected from the group consisting of alkoxylated tri-, tetra-, penta- and hexa(meth)acrylates and mixtures of at least two thereof.

9. A process for producing a formable anti-glare polymeric film according to any of claims 1 to 8, comprising the steps of:

(i) providing a thermoplastic polymeric film having at least one textured surface;
(ii) coating the film on the side of the textured surface with a coating composition comprising

(a) a binder, comprising at least one difunctional (meth)acrylic monomer and/or difunctional (meth)acrylic oligomer; and
(b) a crosslinking agent, comprising at least one multifunctional (meth)acrylic monomer selected from the group consisting of tri-, tetra-, penta- and hexa(meth)acrylates and mixtures of at least two thereof,

wherein said coating composition has a theoretical crosslinking density in the range of from < $2.0 \cdot 10^{-3}$, preferably of from ≤ $1.99 \cdot 10^{-3}$ to ≥ $0.1 \cdot 10^{-3}$, more preferably of from ≤ $1.85 \cdot 10^{-3}$ to ≥ $0.2 \cdot 10^{-3}$.

(iii) curing the coated film with actinic radiation,

(iv) optionally thermally or mechanically forming of the cured film.

**10.** An article comprising a least one film according to any of claims 1 to 8, or produced according to claim 9.

**11.** The article according to claim 10, at least in part obtainable in an in-mold decoration process.

**12.** Article according to claim 10 or 11, wherein the article is a mobile phone, a lens integrated housing, a notebook, a netbook, a computer, a TV, a household device, an interior part of a vehicle, or a body part of a vehicle.

**13.** Use of a film according to any of claims 1 to 8, or produced according to claim 9, for the manufacture of molded articles.

**14.** Use of a coating composition comprising

(a) a binder, comprising at least difunctional (meth)acrylic monomer and/or difunctional (meth)acrylate oligomer; and

(b) a crosslinking agent, comprising at least one multifunctional (meth)acrylic monomer selected from the group consisting of tri-, tetra-, penta- and hexa(meth)acrylates and mixtures of at least two thereof,

wherein said coating composition has a theoretical crosslinking density in the range of from < $2.0 \cdot 10^{-3}$, preferably of from ≤ $1.99 \cdot 10^{-3}$ to ≥ $0.1 \cdot 10^{-3}$, more preferably of from ≤ $1.85 \cdot 10^{-3}$ to ≥ $0.2 \cdot 10^{-3}$
for the manufacture of formable anti-glare polymer films according to claim 1 to 8.

**Patentansprüche**

**1.** Verformbare blendfreie Polymerfolie, wobei eine thermoplastische Polymerfolie mit mindestens einer texturierten Oberfläche und einer Beschichtung auf der texturierten Oberfläche erhältlich ist durch Beschichten mit einem Beschichtungsmittel, umfassend

(a) ein Bindemittel, das mindestens ein difunktionelles (Meth)acryl-Monomer und/oder difunktionelles (Meth)acrylat-Oligomer umfasst; und

(b) ein Vernetzungsmittel, das mindestens ein multifunktionelles (Meth)acryl-Monomer aus der Gruppe bestehend aus Tri-, Tetra-, Penta- und Hexa(meth)acrylaten und Mischungen von mindestens zwei davon umfasst,

wobei das Beschichtungsmittel eine theoretische Vernetzungsdichte ($\chi c$) im Bereich von < $2{,}0 \cdot 10^{-3}$, vorzugsweise von ≤ $1{,}99 \cdot 10^{-3}$ bis ≥ $0{,}1 \cdot 10^{-3}$, weiter bevorzugt von ≤ $1{,}85 \cdot 10^{-3}$ bis ≥ $0{,}2 \cdot 10^{-3}$, aufweist, wobei die theoretische Vernetzungsdichte anhand der folgenden Gleichung berechnet wird:

$$\chi c = \frac{1}{Mc}$$

wobei

$$M_c = \frac{M_0}{f_0 - 2}$$

und wobei

$$M_0 = \frac{n_1 M_1 + n_2 M_2 + \cdots}{n_1 + n_2 + \cdots} \quad \text{und} \quad f_0 = \frac{n_1 f_1 + n_2 f_2 + \cdots}{n_1 + n_2 + \cdots},$$

Mc die Zahl der Mole elastisch effektiver Netzketten pro Kubikzentimeter Folie ist, f die Funktionalität des Moleküls ist und n die Zahl der Mole des Moleküls in der gesamten Formulierung ist.

2. Verformbare blendfreie Polymerfolie nach Anspruch 1, wobei die gemäß DIN ISO 573-2 bestimmte Bruchdehnung der beschichteten Folie ≥ 3,0 %, vorzugsweise ≥ 3,2 %, weiter bevorzugt ≥ 3,5 %, ist.

3. Verformbare blendfreie Polymerfolie nach Anspruch 1 oder 2, wobei die thermoplastische Folie Polycarbonat, Polyacrylat oder Poly(meth)acrylat, Polysulfone, Polyester, thermoplastisches Polyurethan und Polystyrol die Copolymere und Mischungen (Blends) davon umfasst.

4. Verformbare blendfreie Polymerfolie nach einem der Ansprüche 1 bis 3, wobei die thermoplastische Folie ein Polycarbonat umfasst.

5. Verformbare blendfreie Polymerfolie nach einem der Ansprüche 1 bis 4, wobei die unbeschichtete thermoplastische Folie eine Rauhigkeit R3z gemäß DIN ISO 4593 im Bereich von ≥ 500 nm und ≤ 4000 nm oder im Bereich von ≥ 2000 nm und ≤ 8000 nm aufweist.

6. Verformbare blendfreie Polymerfolie nach einem der Ansprüche 1 bis 5, wobei a) aus der Gruppe bestehend aus 1,2-Propandioldiacrylat, 1,3-Butandioldimethacrylat, 1,3-Glyceryldimethacrylat, 1,6-Hexandioldimethacrylat, Diethylenglykoldimethacrylat und Mischungen davon ausgewählt ist und/oder aus der Gruppe bestehend aus Polyester(meth)-acrylat-Oligomeren, Polyacryl(meth)acrylat-Oligomeren, Urethan(meth)acrylat-Oligomeren und Mischungen von mindestens zwei davon, vorzugsweise mindestens einem Urethan(meth)acrylat-Oligomer, ausgewählt ist.

7. Verformbare blendfreie Polymerfolie nach einem der Ansprüche 1 bis 6, wobei a) aus der Gruppe bestehend aus Polyester(meth)acrylat-Oligomeren, Polyacryl(meth)acrylat-Oligomeren, Urethan(meth)-acrylat-Oligomeren und Mischungen von mindestens zwei davon, vorzugsweise mindestens einem Urethan(meth)acrylat-Oligomer, ausgewählt ist.

8. Verformbare blendfreie Polymerfolie nach einem der Ansprüche 1 bis 7, wobei b) aus der Gruppe bestehend aus alkoxylierten Tri-, Tetra-, Penta- und Hexa(meth)acrylaten und Mischungen von mindestens zwei davon ausgewählt ist.

9. Verfahren zur Herstellung einer verformbaren blendfreien Polymerfolie nach einem der Ansprüche 1 bis 8, umfassend die Schritte:

(i) Bereitstellen einer thermoplastischen Polymerfolie mit mindestens einer texturierten Oberfläche;
(ii) Beschichten der Folie auf der Seite der texturierten Oberfläche mit einem Beschichtungsmittel, umfassend

(a) ein Bindemittel, das mindestens ein difunktionelles (Meth)acryl-Monomer und/oder difunktionelles (Meth)acrylat-Oligomer umfasst; und
(b) ein Vernetzungsmittel, das mindestens ein multifunktionelles (Meth)acryl-Monomer aus der Gruppe bestehend aus Tri-, Tetra-, Penta- und Hexa(meth)acrylaten und Mischungen von mindestens zwei davon umfasst, wobei das Beschichtungsmittel eine theoretische Vernetzungsdichte im Bereich von $< 2{,}0 \cdot 10^{-3}$, vorzugsweise von $\leq 1{,}99 \cdot 10^{-3}$ bis $\geq 0{,}1 \cdot 10^{-3}$, weiter bevorzugt von $\leq 1{,}85 \cdot 10^{-3}$ bis $\geq 0{,}2 \cdot 10^{-3}$, aufweist,

(iii) Härten der beschichteten Folie mit aktinischer Strahlung,
(iv) gegebenenfalls thermisches oder mechanisches Verformen des gehärteten Films.

10. Gegenstand, umfassend mindestens eine Folie nach einem der Ansprüche 1 bis 8 oder eine nach Anspruch 9 hergestellte Folie.

11. Gegenstand nach Anspruch 10, der zumindest teilweise in einem In-Mold-Decoration-Verfahren erhältlich ist.

12. Gegenstand nach Anspruch 10 oder 11, wobei es sich bei dem Gegenstand um ein Mobiltelefon, ein Gehäuse mit integrierter Linse, ein Notebook, ein Netbook, einen Computer, ein Fernsehgerät, ein Haushaltsgerät, ein Innenteil eines Fahrzeugs oder ein Karosserieteil eines Fahrzeugs handelt.

13. Verwendung einer Folie nach einem der Ansprüche 1 bis 8 oder einer nach Anspruch 9 hergestellten Folie zur Herstellung von Formkörpern.

14. Verwendung eines Beschichtungsmittels, umfassend

(a) ein Bindemittel, das mindestens ein difunktionelles (Meth)acryl-Monomer und/oder difunktionelles (Meth)acrylat-Oligomer umfasst; und
(b) ein Vernetzungsmittel, das mindestens ein multifunktionelles (Meth)acryl-Monomer aus der Gruppe bestehend aus Tri-, Tetra-, Penta- und Hexa(meth)acrylaten und Mischungen von mindestens zwei davon umfasst,

wobei das Beschichtungsmittel eine theoretische Vernetzungsdichte im Bereich von $< 2{,}0 \cdot 10^{-3}$, vorzugsweise von $\leq 1{,}99 \cdot 10^{-3}$ bis $\geq 0{,}1 \cdot 10^{-3}$, weiter bevorzugt von $\leq 1{,}85 \cdot 10^{-3}$ bis $\geq 0{,}2 \cdot 10^{-3}$, aufweist,
zur Herstellung von verformbaren blendfreien Polymerfolie nach Anspruch 1 bis 8.

## Revendications

1. Film de polymère anti-éblouissement façonnable, un film polymérique thermoplastique possédant au moins une surface texturée et un revêtement sur la surface texturée, ledit revêtement pouvant être obtenu par revêtement avec une composition de revêtement comprenant

(a) un liant, comprenant au moins un monomère (méth)acrylique difonctionnel et/ou un oligomère de (méth)acrylate difonctionnel ; et
(b) un agent de réticulation, comprenant au moins un monomère (méth)acrylique multifonctionnel choisi dans le groupe constitué par des tri(méth)acrylates, des tétra(méth)acrylates, des penta(méth)acrylates et des hexa(méth)acrylates et des mélanges d'au moins deux de ceux-ci,

ladite composition de revêtement possédant une densité de réticulation théorique ($\chi c$) dans la plage allant de $< 2{,}0 \cdot 10^{-3}$, préférablement allant de $\leq 1{,}99 \cdot 10^{-3}$ à $\geq 0{,}1 \cdot 10^{-3}$, plus préférablement allant de $\leq 1{,}85 \cdot 10^{-3}$ à $\geq 0{,}2 \cdot 10^{-3}$, la densité de réticulation théorique étant calculée à partir de l'équation suivante :

$$\chi c = \frac{1}{Mc}$$

où

$$M_c = \frac{M_0}{f_0 - 2}$$

et moyennant quoi

$$M_0 = \frac{n_1 M_1 + n_2 M_2 + \cdots}{n_1 + n_2 + \cdots} \quad \text{et} \quad f_0 = \frac{n_1 f_1 + n_2 f_2 + \cdots}{n_1 + n_2 + \cdots},$$

Mc étant le nombre de moles de chaînes de réseau efficaces de manière élastique par centimètre cube de film, f étant la fonctionnalité de la molécule et n étant le nombre de moles de la molécule dans la formulation entière.

2. Film de polymère anti-éblouissement façonnable selon la revendication 1, l'élongation à la rupture déterminé selon la norme DIN ISO 573-2 du film revêtu étant ≥ 3,0 %, préférablement ≥ 3,2 %, plus préférablement ≥ 3,5 %.

3. Film de polymère anti-éblouissement façonnable selon la revendication 1 ou 2, le film thermoplastique comprenant un polycarbonate, un polyacrylate ou un poly(méth)acrylate, des polysulfones, des polyesters, un polyuréthane thermoplastique et un polystyrène, et les copolymères et mélanges (assemblages) correspondants.

4. Film de polymère anti-éblouissement façonnable selon l'une quelconque des revendications 1 à 3, le film thermoplastique comprenant un polycarbonate.

5. Film de polymère anti-éblouissement façonnable selon l'une quelconque des revendications 1 à 4, le film thermoplastique non revêtu possédant une rugosité R3z selon la norme DIN ISO 4593 dans la plage allant de ≥ 500 nm à ≤ 4 000 nm ou dans la plage allant de ≥ 2 000 nm à ≤ 8 000 nm.

6. Film de polymère anti-éblouissement façonnable selon l'une quelconque des revendications 1 à 5, a) étant choisi dans le groupe constitué par le diacrylate de 1,2-propanediol, le diméthacrylate de 1,3-butanediol, le diméthacrylate de 1,3-glycéryle, le diméthacrylate de 1,6-hexanediol, le diméthacrylate de diéthylèneglycol et des mélanges correspondants et/ou choisi dans le groupe constitué par des oligomères de (méth)acrylates de polyester, des oligomères de (méth)acrylates de polyacryle, des oligomères de (méth)acrylates d'uréthane et des mélanges d'au moins deux de ceux-ci, préférablement au moins un oligomère de (méth)acrylate d'uréthane.

7. Film de polymère anti-éblouissement façonnable selon l'une quelconque des revendications 1 à 6, a) étant choisi dans le groupe constitué par des oligomères de (méth)acrylates de polyester, des oligomères de (méth)acrylates de polyacryle, des oligomères de (méth)acrylates d'uréthane et des mélanges d'au moins deux de ceux-ci, préférablement au moins un oligomère de (méth)acrylate d'uréthane.

8. Film de polymère anti-éblouissement façonnable selon l'une quelconque des revendications 1 à 7, b) étant choisi dans le groupe constitué par des tri(méth)acrylates alcoxylés, des tétra(méth)-acrylates alcoxylés, des penta(méth)acrylates alcoxylés et des hexa(méth)acrylates alcoxylés et des mélanges d'au moins deux de ceux-ci.

9. Procédé pour la production d'un film de polymère anti-éblouissement façonnable selon l'une quelconque des revendications 1 à 8, comprenant les étapes de:

(i) mise à disposition d'un film polymérique thermoplastique possédant au moins une surface texturée ;
(ii) revêtement du film sur le côté de la surface texturée avec une composition de comprenant

(a) un liant, comprenant au moins un monomère (méth)acrylique difonctionnel et/ou un oligomère (méth)acrylique difonctionnel; et
(b) un agent de réticulation, comprenant au moins un monomère (méth)acrylique multifonctionnel choisi dans le groupe constitué par des tri(méth)acrylates, des tétra(méth)acrylates, des penta(méth)acrylates et des hexa(méth)acrylates et des mélanges d'au moins deux de ceux-ci,

ladite composition de revêtement possédant une densité de réticulation théorique dans la plage allant de $< 2{,}0 \cdot 10^{-3}$, préférablement allant de $\leq 1{,}99 \cdot 10^{-3}$ à $\geq 0{,}1 \cdot 10^{-3}$, plus préférablement allant de $\leq 1{,}85 \cdot 10^{-3}$ à $\geq 0{,}2 \cdot 10^{-3}$,
(iii) durcissement du film revêtu avec un rayonnement actinique,
(iv) éventuellement, mise en forme thermiquement ou mécaniquement du film durci.

10. Article comprenant au moins un film selon l'une quelconque des revendications 1 à 8, ou produit selon la revendication 9.

11. Article selon la revendication 10, pouvant être au moins en partie obtenu dans un procédé de décoration dans le moule.

12. Article selon la revendication 10 ou 11, l'article étant un téléphone mobile, un boîtier intégré à une lentille, un ordinateur portable, un netbook, un ordinateur, une TV, un dispositif ménager, partie intérieur d'un véhicule, ou une partie de carrosseries d'un véhicule.

13. Utilisation d'un film selon l'une quelconque des revendications 1 à 8, ou produit selon la revendication 9, pour la fabrication d'articles moulés.

14. Utilisation d'une composition de revêtement comprenant

(a) un liant, comprenant au moins un monomère (méth)acrylique difonctionnel et/ou un oligomère de (méth)acrylate difonctionnel; et
(b) un agent de réticulation, comprenant au moins un monomère (méth)acrylique multifonctionnel choisi dans le groupe constitué par des tri(méth)acrylates, des tétra(méth)acrylates, des penta(méth)acrylates et des hexa(méth)acrylates et des mélanges d'au moins deux de ceux-ci,

ladite composition de revêtement possédant une densité de réticulation théorique dans la plage allant de $< 2{,}0 \cdot 10^{-3}$, préférablement allant de $\leq 1{,}99 \cdot 10^{-3}$ à $\geq 0{,}1 \cdot 10^{-3}$, plus préférablement allant de $\leq 1{,}85 \cdot 10^{-3}$ à $\geq 0{,}2 \cdot 10^{-3}$ pour la fabrication de films de polymère anti-éblouissement façonnables selon les revendications 1 à 8.

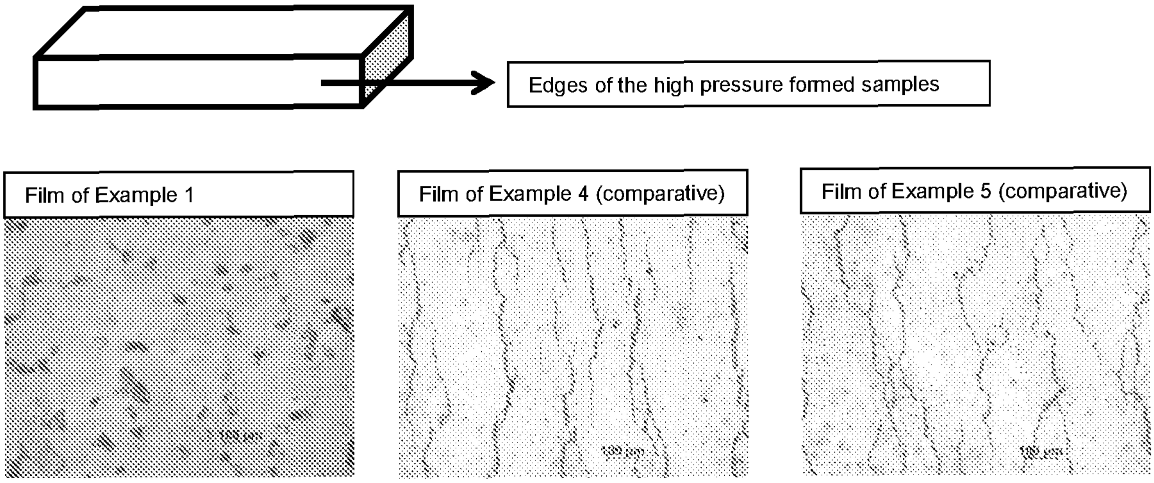
Edges of the high pressure formed samples
Film of Example 1
Film of Example 4 (comparative)
Film of Example 5 (comparative)

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014198739 A1
- WO 2015044137 A1
- US 2012141814 A1
- US 2011080645 A1
- US 2014133033 A1
- KR 20110096475 A
- DE 3832396
- EP 0359953 A
- US 3028365 A
- US 2999835 A
- US 3148172 A
- US 3275601 A
- US 2991273 A
- US 3271367 A
- US 3062781 A
- US 2970131 A
- US 2999846 A
- DE 1570703 A
- DE 2063050 A
- DE 2063052 A
- DE 2211956 A
- FR 561518 A1


### Non-patent literature cited in the description


- **BECKER, M.E. ; NEUMEIER, J.** *Optical Characterization of Scattering Anti-Glare Layers, SID Symposium Digest of Technical Papers, SID,* 2011, vol. 70.4 (42), 1038-1041
- **HUCKABY, D.K.P. ; CAIMS, D.R.** Quantifying ''Sparkle'' of Anti-Glare Surfaces. *SID Symposium Digest of Technical Papers,* 2009, vol. 36.2 (40), 511-513
- **LIU, B.T. ; TENG, Y.T.** A novel method to control inner and outer haze of an anti-glare film by surface modification of light-scattering particles. *Journal of Colloid and Interface Science,* 2010, vol. 350, 421-426
- **STEFAN WALHEIM ; ERIK SCHAFFER ; JÜRGEN MLYNEK ; ULLRICH STEINER.** Nanophase-Separated Polymer Films as High-Performance Antireflection Coatings. *Science,* 1999, vol. 283, 520-522
- UV Coatings-Basics. **R. SCHWALM.** Recent Developments and New Applications. Elsevier Science, 2006
- **H. SCHNELL.** Chemistry and Physics of Polycarbonates. Interscience Publishers, 1964
- Chemistry and Physics of Polycarbonates. **H. SCHNELL.** Polymer Reviews. Interscience Publ, 1964, vol. IX, 33
- **H. F. MARK et al.** Encyclopedia of Polymer Science and Engineering. J. Wiley, 1989, vol. 10, 1
- Chemistry & Technology of UV & EB Formulation for Coatings. Inks & Paints. SITA Technology, 1991, vol. 2, 73-123, 123-135
- **R. SCHWALM ; UV COATINGS-BASIC.** Recent Developments and New Applications. Elsevier Science, 2006
- **CHEN et al.** *Progress in Organic Coatings,* 2006, vol. 55, 291-295